# EUROPÄISCHE PATENTSCHRIFT

(11) **EP 0 485 732 B1**
(45) Veröffentlichungstag und Bekanntmachung des Hinweises auf die Patenterteilung: **04.01.1995**
(21) Anmeldenummer: 91116983.7
(22) Anmeldetag: 04.10.1991
(51) Int. Cl.: B62D 53/02, B60G 9/00, B62D 12/00

(54) **Baufahrzeug, vorzugsweise Radlader mit Knickrahmenlenkung**
Building site vehicle with central pivot steering, especially wheel loader
Engin de chantier à direction par pivot central, en particulier chargeur à roues

(30) Priorität: 14.11.1990 DE 4036303
(43) Veröffentlichungstag der Anmeldung: 20.05.1992
(73) Patentinhaber: Liebherr-Werk Bischofshofen GmbH, 5500 Bischofshofen (AT)
(72) Erfinder: Schröder, Klaus, Dipl.-Ing., W-7951 Kirchdorf/Iller (DE); Stickler, Johann, Dipl.-Ing., A-5600 St. Johann im Pongau (AT)
(74) Vertreter: Gossel, Hans K., Dipl.-Ing.

(56) Entgegenhaltungen:
- EP-A- 0 098 821
- CH-A- 400 787
- DE-A- 2 511 446
- DE-A- 3 623 347
- DE-A- 3 903 400
- DE-B- 1 252 080
- DE-C- 807 468
- FR-A- 434 419
- FR-A- 2 375 080
- GB-A- 139 324
- GB-A- 678 866
- GB-A- 2 217 667
- US-A- 3 771 241
- US-A- 3 912 300
- US-A- 4 100 990

## Beschreibung

Die Erfindung betrifft ein Baufahrzeug, vorzugsweise Radlader, mit Knickrahmenlenkung nach dem Oberbegriff des Patentanspruchs 1.

Aus US-A-3,912,300 ist ein Fahrzeug dieser Art mit Knickrahmenlenkung bekannt, bei dem das obere Gelenk der gelenkigen Verbindung an einem Hebel gelagert ist, der über eine elastische Buchse mit einem Fahrzeugteil verbunden ist, so daß das obere Gelenk relativ zu dem unteren Gelenk ausschwenken und pendeln kann. Dabei besteht die elastische Buchse aus einem einen starr mit einem Fahrzeugteil verbundenen Bolzen umfassenden Gummiteil, das erheblichen Scherkräften ausgesetzt ist und daher nur eine begrenzte Lebensdauer hat.

Aufgabe der Erfindung ist es daher, ein Baufahrzeug nach dem Oberbegriff des Patentanspruchs 1 zu schaffen, das mit einer Knickrahmenlenkung von längerer Lebensdauer versehen ist.

Erfindungsgemäß wird diese Aufgabe durch das kennzeichnende Merkmal des Patentanspruchs 1 gelöst.

Mit der erfindungsgemäßen Gelenkfederung versehene Baufahrzeuge erhöhen den Fahr- und Arbeitskomfort für den Fahrer beträchtlich, da dieser nicht sämtliche Schwenkbewegungen der Vorderachse um die horizontale Längsachse des vorderen Rahmenteils mitmachen muß.

Zweckmaßigerweise sind mit dem Außenring beidseits zwei im Abstand zueinander angeordnete Blattfedern verbunden, deren anderen Enden an einem Rahmenteil befestigt sind.

Zweckmaßigerweise ist nur das obere Gelenk der gelenkigen Verbindung der beiden Rahmenteile beweglich ausgebildet, so daß dieses gleichsam gegenüber dem unteren Gelenk gegen die elastische Rückstellkraft der Federn auspendeln kann.

Zweckmäßigerweise sind die Blattfedern mit dem die Hinterachse tragenden Rahmenteil verbunden. Zwischen die Blattfedern Kann eine diese in ihrem ausgefederten Zustand stützende Zunge des diese tragenden Rahmenteils ragen, gegen die sich die Blattfedern in ihrer ausgefederten Grenzlage legen, so daß unzulässige Verformungen der Blattfedern ausgeschlossen sind.

Zusätzlich können die Federwege begrenzende Anschläge vorgesehen werden, wodurch ein eventuelles Abscheren der Federn verhindert wird.

Bei Baufahrzeugen der eingangs angegebenen Art tragen die hinteren Rahmenteile üblicherweise Pendelachsen. Entsprechend dem Schwenkwinkel der Pendelachsen kann der hintere Rahmenteil frei schwenken, was von dem Fahrer üblicherweise als unangenehm emprunden wird.

Nach einer besonderen Ausgestaltung der Erfindung, ist daher vorgesehen, daß die Hinterachse an den Enden von im wesentlichen in einer zu dem hinteren Rahmenteil parallelen Ebene verlaufenden Blattfedern befestigt ist, deren anderen Enden an dem Rahmenteil befestigt sind, und daß die Hinterachse in ihrem mittleren Bereich zwischen den Blattfedern an den hinteren Rahmenteil abgestutzt ist. Bei dieser erfindungsgemäßen Ausgestaltung des Baufahrzeugs ist also auch die Hinterachse unter Verzicht aus eine Pendelachse gegenüber dem hinteren Rahmenteil abgefedert. Da keine Pendelachse vornanden ist, walzt sich der hintere Rahmenteil gleichsam wiegenartig auf der Hinterachse entsprechend der Ein- bzw. Ausfederung der Blattfedern ab. Da der hintere Rahmenteil nicht mehr ungefedert gegenüber der Hinterachse auspendeln kann, hat der Fahrer des Baufahrzeugs das Gefühl größerer Sicherheit und Stabilität.

Ist das Baufahrzeug neben der von den Blattfedern getragenen Hinterachse zusätzlich mit einem gegen Federkraft beweglichen knickrahmengelenk versehen, kann der gesamte Federweg der Hinterachse gegenüber dem Schwenkwinkel üblicher Pendelachsen erheblich verringert werden, weil ein Teil des erforderlichen Schwenkweges von dem Lager der knickrahmenlenkung ausgeglichen wird. Das Baufahrzeug erhält dadurch insgesamt ein angenehmeres und stabileres Fahrverhalten.

Zweckmäßigerweise sind jeweils zwei Blattfedern in Draufsicht deckungsgleich an den seitlichen Bereichen der Achse befestigt, deren anderen Enden an dem Rahmenteil befestigt sind. Die Blattfedern können von den Achsen in Richtung auf ihre Befestigungsstellen an dem Rahmenteil in Seitenansicht zusammenlaufen. Weiterhin können beide Blattfederpaare auch in Draufsicht in Richtung auf ihre Befestigungsstellen an dem Rahmenteil zusammenlaufen, was zusätzlichen Platz für die Räder schafft, insbesondere wenn diese lenkbar ausgebildet sind, wie es nach einer weiteren bevorzugten Ausführungsform vorgesehen ist.

Zweckmäßigerweise befinden sich die Befestigungsstellen der Blattfedern an dem hinteren Rahmenteil hinter der Achse, was zu einer günstigen Raumaufteilung führt.

Die Blattfedern können ein- oder mehrlagig ausgebildet sein.

Um zu verhindern, daß die nur von den Blattfedern getragene Hinterachse bei einem Anheben des hinteren Rahmenteils herunterfällt, ist nach einer bevorzugten Ausführungsform vorgesehen, daß die Achse mit einem frei auskragenden nasenartigen Vorsprung versehen ist, der mit Spiel in eine Tragöse des Rahmenteils greift.

Nach einer weiteren bevorzugten Ausfühtungsform, ist vorgesehen, daß die Hinterräder lenkbar sind und das zugehörige Lenkgestänge mit den Rahmenteilen in der Weise verbunden ist, daß die Hinterräder der Knicklenkung überlagerte gleichsinnige Lenkbewegungen ausführen. Diese Ausgestaltung ermöglicht es, ohne zu starke Einknickung der beiden Rahmenteile enge Kurvenradien zu fahren, was das Besteigen und Verlassen der Fahrerkabine mit eingeschlagenen Rädern vereinfacht, weil zwischen den Rädern der Vorder- und Hinterachse mehr Raum vorhanden ist. Weiterhin wird die Standfestigkeit des Baufahrzeugs durch diese Ausgestaltung erhöht, weil der Ballast weniger weit über die Kippkante auswandert. Schließlich kann auch der Radstand vergrößert werden, ohne daß dadurch der erreichbare Kurvenradius verkleinert wird, was zu einer zusätzlichen Stabilität des Baufahrzeugs führt.

Bei dem erfindungsgemäßen Baufahrzeug kann der Schwenkwinkel der Hinterachse gegenüber dem hinteren Rahmenteil verringert werden, weil die beiden Rahmenteile im Bereich der Knickgelenke gegen Federkraft um ihre Längsachse zueinander verschwenken können. Dies hat den Vorteil, daß die auf dem hinteren Rahmenteil befestigte Fahrerkabine beim Überfahren von Hindernissen weniger stark ausgeschwenkt wird, was den Fahrkomfort und das Sicherheitsgefühl des Fahrers beträchtlich vergrößert. Ist beispielsweise ein Schwenkwinkel von der starr mit dem vorderen Rahmenteil verbundenen Vorderachse zu der Hinterachse von 12 Grad erwünscht, kann ein Schwenkwinkel von beispielsweise 6 Grad in die Hinterachse und ein weiterer Schwenkwinkel von 6 Grad in die Knickgelenklagerung verlegt werden, was zu geringeren Schwenkbewegungen führt.

Da das erfindungsgemäße Baufahrzeug keine die Hinterachse lagernde Pendelachse aufweist, kann Bauhöhe eingespart werden. Dies ermöglicht es, den Motor und weitere Aggregate tiefer im Verhältnis zur Hinterachse anzuordnen, was zusätzlich die Standsicherheit erhöht.

Ausführungsbeispiele der Erfindung werden nachstehend anhand der Zeichnung näher erläutert. In dieser zeigt
- Fig.1: einen Längsschnitt durch das die Hinterachse tragende Rahmenteil und die gelenkige Verbindung mit dem vorderen Rahmenteil des Baufahrzeugs,
- Fig.2: eine Draufsicht auf das hintere Rahmenteil sowie die gelenkige Verbindung mit dem hinteren Bereich des vorderen Rahmenteils nach Fig.1,
- Fig.3: einen Schnitt durch das das vordere Rahmenteil mit dem hinteren Rahmenteil verbindende Knickgelenk
- Fig.4: eine Draufsicht auf das Knickgelenk nach Fig.3,
- Fig.5: einen Schnitt durch eine andere federnde Halterung des oberen beweglichen Lagers des Knickgelenks,
- Fig.6: eine Draufsicht auf die federnde Halterung nach Fig.5,
- Fig.7: eine Draufsicht auf die Hinterachse mit ihrer Blattfederhalterung und
- Fig.8: einen Schnitt durch die Hinterachse mit einer Seitenansicht einer Blattfederhalterung der Hinterachse.

Das hintere Rahmenteil 1 ist durch die insgesamt mit 2 bezeichnete Knickgelenklagerung mit dem vorderen Rahmenteil 3 gelenkig verbunden, das in nicht dargestellter Weise die starr mit diesem verbundene Vorderachse trägt. Seitlich der vertikalen Schwenkachse 4 des Knickgelenks 2, die im unbelasteten Zustand des Fahrzeugs von den beiden Langsmittelebenen 5,6 der hinteren und vorderen Rahmenteile 1,3 geschnitten wird, ist an einer an dem vorderen Rahmenteil 3 befestigten Konsole 7 die Kolbenstange 8 eines Lenkzylinders 9 gelagert. Der Lenkzylinder 9 ist in seinem hinteren Bereich um die Achse 10 schwenkbar auf einer mit dem hinteren Rahmenteil 1 verbundenen Konsole gelagert.

Die Hinterachse 11 ist beidseits des Differentialgetriebes durch Blattfederpaare 12,13 gehalten, deren vorderen Enden mit der Hinterachse 11 verschraubt und deren hinteren Enden mit dem hinteren Endbereich des hinteren Rahmenteils 1 verschraubt sind.

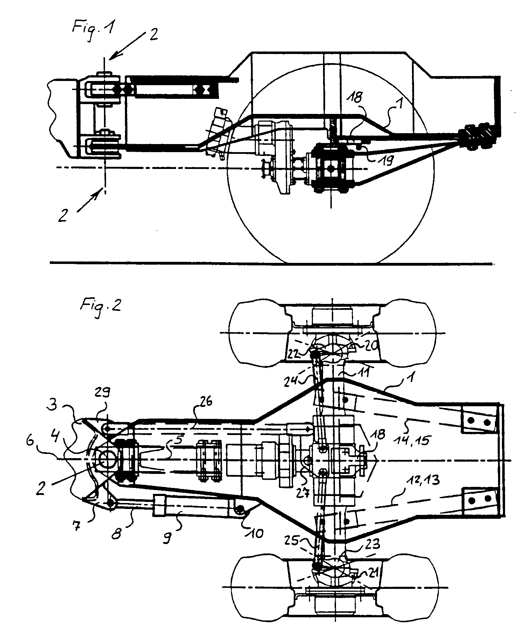

Mit dem mittleren Bereich der Hinterachse ist eine frei nach hinten auskragende Nase 18 verbunden, die mit Spiel in eine U-förmige Öse 19 greift, deren Schenkel mit dem hinteren Rahmenteil 1 verbunden sind. Weiterhin sind in der aus Fig.2 ersichtlichen Weise seitliche Anschläge für die Nase 18 an dem hinteren Rahmenteil 1 vorgesehen, die unzulässig weite seitliche Ausschwenkbewegungen der Hinterachse 11 verhindern.

Die Radlager 20,21 sind schwenkbar an der Hinterachse 11 gehalten und mit Lenkhebeln 22,23 versehen. Diese Lenkhebel sind durch Übertragungsgestänge 24,25,26 und einen schwenkbar gelagerten Winkelhebel 27 mit einer an den vorderen Rahmenteil 3 befestigten Konsole 29 verbunden, so daß die hinteren Räder die Knicklenkung unterstützende Lenkbewegungen ausführen.

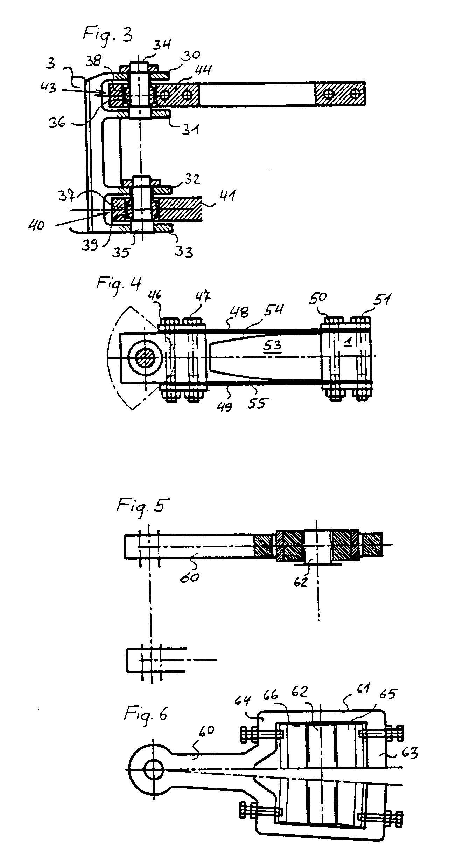

Das den hinteren Rahmenteil 1 und den vorderen Rahmenteil 3 verbindende Knickgelenk 2 wird nun anhand der Fig.3 und 4 näher erläutert.

Der vordere Rahmenteil 3 weist übereinanderliegend und im Abstand voneinander zwei Lagergabeln mit den Lagerschenkeln 30,31 und 32,33 auf. In fluchtenden Bohrungen dieser Lagerschenkel 30 bis 33 sind miteinander fluchtende Lagerbolzen 34,35 gehaltert. Auf diesen Lagerbolzen sind jeweils zwischen den Lagerschenkeln 30,31 und 32,33 Kugeln 36,37 gehaltert, die mit den Außenschalen 38,39 Kugelgelenke bilden. Bei dem unteren Lager 40 ist die Außenschale 39 des Kugelgelenks starr in einer auskragenden unteren Zunge 41 des hinteren Rahmenteils gehalten.

Bei dem oberen Lager 43 ist die Außenschale 38 des Kugellagers in einem Halteblock 44 befestigt, mit dem durch die Spannschrauben 46,47 seitliche Blattfedern 48,49 verschraubt sind. Die hinteren Enden der Blattfedern 48,49 sind durch Spannschrauben 50,51 mit einem Halteteil des hinteren Rahmenteils 1 verschraubt. Zwischen das Blattfederpaar 48,49, das im dargestellten Ausführungsbeispiel parallel zueinander verläuft, ragt eine mit dem hinteren Rahmenteil 1 verbundene Zunge 53, die mit Flanken 54,55 versehen ist, gegen die sich die Blattfedern 48,49 bei ihrer größten Ausfederung legen können und die dadurch den Federweg begrenzen.

An dem hinteren Rahmenteil 1 sind weiterhin nicht dargestellte Anschläge vorgesehen, gegen die sich der Block 44 anlegen kann, um den größten Schwenkweg des relativ zu dem hinteren Rahmenteil 1 pendelnd gelagerten oberen Lagers 43 der Knicklagerung 2 zu begrenzen.

Bei der nicht beanspruchten Lagerung nach den Fig.5 und 6 ist statt des Blattfederpaares 48,49 ein Hebelarm 60 vorgesehen, in dem in nicht näher dargestellter Weise die innere Schale 38 des oberen Kugelgelenks 43 gelagert ist. Der Hebelarm 60 ist mit einem hinteren rechteckigen Rahmen 61 verbunden, der mit einer mittleren, im wesentlichen rechteckigen Aussparung versehen ist. In diese Aussparung ragt ein auf dem hinteren Rahmenteil befestigter aufragender Steg 62, wobei zwischen diesem Steg 62 und dem hinteren Holm 63 und dem vorderen Holm 64 des Rahmen 1 Gummiklötze 65,66 eingespannt sind, die auf metallische Halteplatten 67,68 aufvulkanisiert sind. Um die Gummiklötze 65,66 gegen den rahmenfesten Steg 62 zu verspannen, sind in der dargestellten Weise vier Spannschrauben vorgesehen.

Aus Fig.6 ist in der unteren Hälfte der Rahmen 61 in seiner ausgeschwenkten Stellung dargestellt.

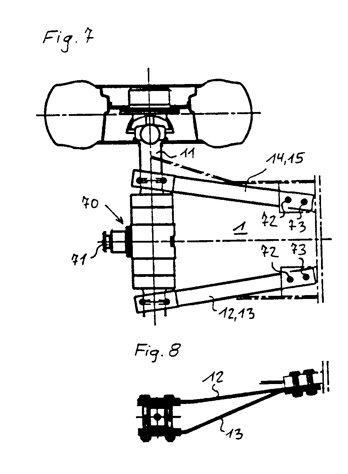

Wie aus den Fig. 7 und 8 ersichtlich ist, sind die Blattfederpaare 12,13 und 14,15 beidseits des Differentials 70 durch obere und untere Halteplatten und Spannschrauben mit der Hinterachse 11 verbunden. Die Blattfederpaare 12,13 laufen in Richtung auf das hintere Ende des hinteren Rahmenteils sowohl in Draufsicht als auch in Seitenansicht zusammen und sind durch Schrauben 72,73 mit dem hinteren Rahmenteil 1 verbunden. Die Eingangswelle 71 des Differentials 70 ist in üblicher Weise mit der nicht dargestellten Kardanwelle verbunden.

## Patentansprüche

1. Baufahrzeug, vorzugsweise Radlader, mit Knickrahmenlenkung, die aus die Vorderachse und aus die Hinterachse (11) tragenden Rahmenteilen (1, 3) besteht, die durch zwei mit ihren vertikalen Schwenkachsen (4) in den Längsmittelebenen (5, 6) der beiden Rahmenteile (1, 3) liegende und einen vertikalen Abstand voneinander aufweisende Gelenke (36, 37) und einen Lenkzylinder (8, 9) miteinander verbunden sind,
wobei die Gelenke aus Kugelgelenken (36, 37) mit Außenringen (38, 39) bestehen, zusätzlich eine Verschwenkung um eine im wesentlichen horizontale, zur Fahrzeuglängsachse parallele Achse zulassen und der Außenring (38) mindestens eines der Gelenke (36) in der Weise elastisch an einem der Rahmenteile (1) gehalten ist, daß dieses Gelenk (36) relativ zu dem anderen (37) ausschwenken oder pendeln kann,
**dadurch gekennzeichnet**,
daß der Außenring (38) des beweglichen Gelenks (36) durch Blattfedern (48, 49) mit einem der Rahmenteile (1) verbunden ist.

2. Baufahrzeug nach Anspruch 1, dadurch gekennzeichnet, daß mit dem Außenring (38) beidseits zwei im Abstand zueinander angeordnete Blattfedern (48, 49) verbunden sind, deren andere Enden an einem Rahmenteil (1) befestigt sind.

3. Baufahrzeug nach einem der Ansprüche 1 bis 2, dadurch gekennzeichnet, daß das obere Gelenk (36) beweglich ausgebildet ist.

4. Baufahrzeug nach einem der Ansprüche 1 bis 3, dadurch gekennzeichnet, daß die Blattfedern (48, 49) mit dem die Hinterachse (11) tragenden Rahmenteil (1) verbunden sind.

5. Baufahrzeug nach einem der vorhergehenden Ansprüche, dadurch gekennzeichnet, daß zwischen die Blattfedern (48, 49) eine diese in ihrem ausgefederten Zustand stützende Zunge (53) des diese tragenden Rahmenteils (1) ragt.

6. Baufahrzeug nach einem der Ansprüche 1 bis 5, dadurch gekennzeichnet, daß die Hinterachse (11) an den Enden von im wesentlichen in einer zu dem hinteren Rahmenteil (1) parallelen Ebene verlaufenden Blattfedern (12 bis 15) befestigt ist, deren andere Enden an dem Rahmenteil (1) befestigt sind, und daß die Hinterachse (11) in ihrem mittleren Bereich zwischen den Blattfedern (12 bis 15) an dem hinteren Rahmenteil (1) abgestützt ist.

7. Baufahrzeug nach Anspruch 6 dadurch gekennzeichnet, daß jeweils zwei Blattfedern (12, 13; 14, 15) in Draufsicht deckungsgleich an den seitlichen Bereichen der Achse (11) befestigt sind, deren andere Enden an dem Rahmenteil (1) befestigt sind.

8. Baufahrzeug nach Anspruch 6 oder 7, dadurch gekennzeichnet, daß die Blattfeder (12 bis 15) von der Achse in Richtung auf deren Befestigungsstellen an dem Rahmenteil (1) in Seitenansicht zusammenläuft.

9. Baufahrzeug nach einem der Ansprüche 6 bis 8, dadurch gekennzeichnet, daß beide Blattfederpaare in Draufsicht in Richtung auf ihre Befestigungsstellen an dem Rahmenteil zusammenlaufen.

10. Baufahrzeug nach einem der Ansprüche 6 bis 9, dadurch gekennzeichnet, daß die Befestigungsstellen der Blattfedern (12 bis 15) an dem hinteren Teil hinter der Hinterachse (11) liegen.

11. Baufahrzeug nach einem der Ansprüche 1 bis 10, dadurch gekennzeichnet, daß die Blattfedern (48, 49; 12 bis 15) ein- oder mehrlagig ausgebildet sind.

12. Baufahrzeug nach einem der Ansprüche 6 bis 11, dadurch gekennzeichnet, daß die Achse (11) mit einem frei auskragenden, nasenartigen Vorsprung (18) versehen ist, der mit Spiel in eine Tragöse (19) des Rahmenteils (1) greift.

13. Baufahrzeug nach einem der vorhergehenden Ansprüche, dadurch gekennzeichnet, daß die Hinterräder lenkbar sind und das zugehörige Lenkgestänge (24 bis 27) mit den Rahmenteilen (1, 2) in der Weise verbunden ist, daß die Hinterräder der Knicklenkung überlagerte, gleichsinnige Lenkbewegungen ausführen.

## Claims

1. A building site vehicle, preferably a wheeled loader with central pivot steering, which consists of chassis parts (1, 3) carrying the front axle and the rear axle (11) that are connected to each other by two joints (36, 37), lying with their vertical pivot pins (4) in the longitudinal median planes (5,8) of the two chassis parts (1, 3) and being interspaced by a vertical distance from each other, and by a steering cylinder (8, 9),
in which arrangement, the joints consist of ball joints (36, 37) with outer rings (36, 39), additionally permit pivoting round a substantially horizontal axis that is parallel to the longitudinal axis of the vehicle, and the outer ring (38) of at least one of the joints (36) is held elastically on one of the chassis parts (1) in such a way that this joint (36) is capable of swinging out or oscillating relative to the other (37),
**characterized in that**
the outer ring (38) of the movable joint (36) is connected to one of the chassis parts (1) by leaf springs (48, 49).

2. A building site vehicle according to claim 1, characterized in that two leaf springs (48, 49), arranged on both sides at an interspacing from each other, are connected to the outer ring (30), the other ends of which springs are secured on a chassis part (1).

3. A building site vehicle according to one of claims 1 to 2, characterized in that the upper joint (36) is designed to be movable.

4. A building site vehicle according to one of claims 1 to 3, characterized in that the leaf springs (48, 49) are connected to the chassis part (1) that carries the rear axle (11).

5. A building site vehicle according to one of the preceding claims, characterized in that between the leaf springs (48, 49) there projects a tongue (53) of the chassis part (1) carrying them, which supports the springs in their rebound state.

6. A building site vehicle according to one of claims 1 to 5, characterized in that the rear axle (11) is secured on the ends of leaf springs (12 to 15) extending in a plane that is substantially parallel to the rear chassis part (1), the other ends of which springs are secured on the chassis part (1), and that the rear axle (11) is supported in its median zone between the leaf springs (12 to 15) on the rear chassis part (1).

7. A building site vehicle according to claim 6, characterized in that two leaf springs (12, 13; 14, 15) respectively are secured at the lateral zones of the axle (11) in a congruent manner as viewed in a top view, the other ends of which springs are secured on the chassis part (1).

8. A building site vehicle according to claim 6 or 7, characterized in that, in a side view, the leaf spring (12 to 15) converges from the axle in the direction towards its fixing points at the chassis part.

9. A building site vehicle according to one of claims 6 to 8, characterized in that in a side view, both pairs of the leaf springs converge in the direction towards its fixing points at the chassis part.

10. A building site vehicle according to one of claims 6 to 9, characterized in that the points for mounting the leaf springs (12 to 15) lie at the rear part behind the rear axle (11).

11. A building site vehicle according to one of claims 1 to 10, characterized in that the leaf springs (48, 49; 12 to 15) have a single or multilayer design.

12. A building site vehicle according to one of claims 6 to 11, characterized in that the axle (11) is provided with a freely projecting nose-type projection (18) which engages with play in a bearing eye (19) of the chassis part (1).

13. A building site vehicle according to one of the preceding claims, characterized in that the rear wheels are steerable and the associated steering linkage (24 to 27) is connected to the chassis parts (1, 2) in such a way that the rear wheels of the central pivot steering execute superposed steering movements in the same direction.

## Revendications

1. Engin de chantier à direction par pivot central, en particulier chargeur à roues, dont la direction est constituée des éléments de cadre (1, 3) portant l'axe avant et l'axe arrière (11), la jonction étant assurée par deux articulations (36, 37) présentant un écart vertical et reposant avec leurs axes de pivotement verticaux (4) sur les niveaux moyens longitudinaux (5,6) des deux éléments de cadre (1, 3), et par un vérin de direction (8,9).
Les articulations sont constituées de joints à rotule (36, 37) et d'anneaux externes (38, 39) ; elles peuvent pivoter autour d'un axe essentiellement horizontal et parallèle à l'axe longitudinal du véhicule. L'anneau externe (38) d'une articulation (36) au moins est fixé à un des éléments du cadre (1) et ce de manière à ce que l'articulation (36) en question puisse pivoter ou balancer par rapport à l'autre articulation (37).
Caractéristiques :
L'anneau externe (38) de l'articulation mobile (36) est relié au moyen de ressorts à lame (48, 49) à un des éléments du cadre (1).

2. Engin de chantier selon la revendication 1, présentant les caractéristiques suivantes : l'anneau externe (38) est relié de part et d'autre par deux ressorts à lame (48, 49) présentant un écart entre eux et dont les extrémités opposées sont rattachées à une partie du cadre (1).

3. Engin de chantier selon une des revendications 1 à 2, présentant les caractéristiques suivantes : l'articulation supérieure (36) est conçue pour être mobile.

4. Engin de chantier selon une des revendications 1 à 3, présentant les caractéristiques suivantes : les ressorts à lame (48, 49) sont rattachés à l'élément de cadre (1) portant l'axe arrière (11).

5. Engin de chantier selon une des revendications qui précèdent, et présentant les caractéristiques suivantes : entre les ressorts à lame (48, 49) rattachés à l'élément de cadre (1) dépasse une langue (53) qui supporte les ressorts dans leur état de débattement.

6. Engin de chantier selon une des revendications 1 à 5, présentant les caractéristiques suivantes : l'axe arrière (11) est attaché aux extrémités des ressorts à lame (12 à 15), à un niveau qui est essentiellement parallèle à l'élément de cadre arrière (1), dont les autres extrémités sont attachées à l'élément de cadre (1), l'axe arrière (11) étant dans sa partie médiane soutenue entre les ressorts à lame (12 à 15) sur l'élément de cadre arrière (1).

7. Engin de chantier selon la revendication 6, présentant les caractéristiques suivantes : vus d'en haut et de part et d'autre, les deux ressorts à lame (12, 13 ; 14, 15) sont fixés de manière égale sur les parties latérales de l'axe (11) , les autres extrémités étant rattachées à l'élément de cadre (1).

8. Engin de chantier selon les revendications 6 ou 7, présentant les caractéristiques suivantes : vus de côté, les ressorts à lame (12 à 15) de l'axe convergent en direction de leurs emplacements de fixation sur l'élément de cadre (1).

9. Engin de chantier selon une des revendications 6 à 8, présentant les caractéristiques suivantes : vues d'en haut, les deux paires de ressorts à lame convergent en direction de leurs emplacements de fixation sur l'élément de cadre.

10. Engin de chantier selon une des revendications 6 à 9, présentant les caractéristiques suivantes : les emplacements de fixation des ressorts à lame (12 à 15) sont situés dans la partie arrière, derrière l'axe arrière (11).

11. Engin de chantier selon une des revendications 1 à 10, présentant les caractéristiques suivantes : les ressorts à lame (48, 49 ; 12 à 15) sont constitués d'une ou de plusieurs lames.

12. Engin de chantier selon une des revendications 6 à 11, présentant les caractéristiques suivantes : l'axe (11) est constitué d'une proéminence en forme de nez qui fait librement saillie ; la proéminence entre avec un certain jeu dans un orifice de support (19) de l'élément de cadre (1).

13. Engin de chantier selon une des revendications qui précèdent, et présentant les caractéristiques suivantes : les roues arrière sont dirigeables et la timonerie (24 à 27) associée est fixée de telle manière aux éléments de cadre (1, 2), que les roues arrière exécutent des mouvements de direction dans le même sens et par superposition à la direction par pivot.
